**Europäisches Patentamt**

**European Patent Office**

**Office européen des brevets**

(19)

(11) Veröffentlichungsnummer: **0 124 697**

**B1**

(12)

# EUROPÄISCHE PATENTSCHRIFT

(45) Veröffentlichungstag der Patentschrift:
04.01.89

(51) Int. Cl.⁴: **B 23 B 31/16,** B 23 B 31/14

(21) Anmeldenummer: **84102017.5**

(22) Anmeldetag: **27.02.84**

(54) **Kraftbetätigtes Spannfutter.**

(30) Priorität: **07.05.83 DE 3316770**

(73) Patentinhaber: **SMW Schneider & Weisshaupt GmbH, Wiesentalstrasse 28, D-7996 Meckenbeuren (DE)**

(43) Veröffentlichungstag der Anmeldung:
**14.11.84 Patentblatt 84/46**

(72) Erfinder: **Hiestand, Karl, Mühlweg 2, D-7798 Pfullendorf (DE)**

(45) Bekanntmachung des Hinweises auf die Patenterteilung:
**04.01.89 Patentblatt 89/1**

(74) Vertreter: **Engelhardt, Guido, Dipl.- Ing., Montafonstrasse 35 Postfach 1350, D-7990 Friedrichshafen 1 (DE)**

(84) Benannte Vertragsstaaten:
**DE FR GB IT**

(56) Entgegenhaltungen:
**DE-A-3 111 337**
**DE-A-3 148 661**
**FR-A-1 008 989**
**FR-A-2 144 211**
**GB-A-1 541 011**
**US-A-2 474 633**
**US-A-4 047 723**
**US-A-4 139 206**

EP 0 124 697 B1

## Beschreibung

Die Erfindung bezieht sich auf ein kraftbetätigtes Spannfutter für Drehmaschinen mit in einem Futterkörper radial verschiebbar geführten Spannbacken, die durch einen axial bewegbaren Spannkolben über jeweils ein Keilgetriebe betätigbar sind.

Derartige auch als Keilhakenfutter bezeichnete Kraftspannfutter sind in der Fachwelt in unterschiedlichen Ausgestaltungen bekannt und haben sich in der Praxis bewährt. Um die bei hohen Drehzahlen von den Spannbacken hervorgerufenen Zentrifugalkräfte auszugleichen, durch die eine nach innen gerichtete Spannkraft reduziert, eine nach außen gerichtete Spannkraft jedoch erheblich erhöht wird, ist es des weiteren bekannt (vgl. z. B. US-A-4 047 723, DE-A-2 236 651 und DE-U-7 613 635), im Futterkörper geführte, radial bewegbare Ausgleichselemente als Gegengewichte vorzusehen, die über ebenfalls im Futterkörper abgestützte Gelenkhebel mit den Backen trieblich verbunden sind. Hierbei ist vor allem von Nachteil, daß die auf ein eingespanntes Werkstück einwirkenden statischen Spannkräfte vor und nach einem Bearbeitungsvorgang mitunter sehr unterschiedlich sind. Bei Umlauf des Spannfutters mit hohen Drehzahlen wird nämlich die von dem Spannkolben über die Keilhaken auf die Backen übertragene Spannkraft durch die von diesen hervorgerufene Zentrifugalkraft durch die Elastizität der Bauteile nahezu aufgehoben, in diesem Betriebszustand wird somit ein Teil der Spannkraft von den Ausgleichselementen erzeugt, die über die Umlenkhebel mit den Backen verbunden sind. Der über die Keilflächen der Keilhaken mit den Backen gekoppelte Spannkolben ist demnach entlastet, so daß dieser durch die weiterhin auf diesen einwirkende Zugkraft einer angeschlossenen Servoeinrichtung, wenn auch nur geringfügig, verstellt wird. Außerdem wird durch die Zentrifugalkraft der Futterkörper aufgeweitet, so daß auch die den Spannkolben aufnehmende Bohrung vergrößert wird. Die Keilhaken sind somit nicht mehr abgestützt und können nach außen ausweichen. Dadurch wird eine zusätzliche Verstellbewegung des Spannkolbens hervorgerufen. Nach einer Werkstücksbearbeitung werden aber die Backen des Spannfutters von dem sich bei Stillstand wieder zusammenziehenden Futterkörper über die Keilhaken nach innen gedrückt, da aber der Spannkolben nicht zurückgestellt, sondern in dieser Lage festgehalten wird, wird nunmehr eine erhöhte Spannkraft auf das Werkstück ausgeübt. Dies führt, da der Spannkraftanstieg erheblich sein kann, oftmals zu einer unerwünschten Verformung des eingespannten Werkstückes.

Es ist daher Aufgabe der Erfindung, ein kraftbetätigtes Spannfutter für Drehmaschinen der eingans genannten Art zu schaffen, das bei geringer axialer Baulänge und hoher Betriebssicherheit für hohe Spannkräfte geeignet ist und bei dem mit einfachen Mitteln die durch die Backen hervorgerufenen Zentrifugalkräfte auszugleichen sind und eine zusätzliche Verstellbewegung des Spannkolbens verhindert wird, so daß eine Erhöhung der statischen Spannkraft nach einem Arbeitsvorgang nicht eintritt. Der Spannkolben soll vielmehr in Abhängigkeit von der Rotation des Spannfutters zuverlässig festgehalten und die Auffederung des Futterkörpers soll kompensiert werden, so daß eine unerwünschte Backenverstellung ausgeschlossen ist. Des weiteren soll der Bauaufwand, um dies zu bewerkstelligen, gering sein.

Diese Aufgabe wird erfindungsgemäß mit dem im Anspruch 1 angegebenen Spannfutter gelöst.

Bei nach außen verschwenkbar gelagerten Ausgleichsgewichten ist es zweckmässig daß, die Druckglieder unmittelbar an diesen angeformt sind und die Lagerung der Ausgleichsgewichte bilden.

Zweckmäßig ist es ferner, die mit den Ausgleichsgewichten verbundenen Druckglieder auf der dem Spannkolben zugekehrten Seite mit einer angearbeiteten, vorzugsweise der Außenmantelfläche des Spannkolbens angepaßten Stützfläche zu versehen, so daß eine zurverlässige Abstützung gewährleistet ist.

Bei radial verschiebbar geführten Ausgleichsgewichten ist es vorteilhaft, diese jeweils über einen schwenkbar gelagerten Hebel mit dem Druckglied zu koppeln der mit einem Ende fest mit diesem verbunden und mit dem anderen Ende verschiebbar in einer in das Ausgleichsgewicht eingearbeiteten Nut geführt ist. Auf diese Weise kann die durch die Ausgleichsgewichte erzeugte Kraft übersetzt werden.

Auch kann das Druckglied über eine zwischen ihm und dem Spannkolben eingesetzte Druckleiste auf diesem abgestützt sein, wobei die Druckleiste eine der Außenmantelfläche des Spannkolbens angepaßte Druckfläche aufweisen sollte.

Die die Ausgleichsgewichte aufnehmenden Aussparungen sind in einfacher Weise jeweils auf der den Spannbacken gegenüberliegenden Seite in den Futterkörper und/oder den Abschlußdeckel einzuarbeiten und die Druckglieder sind als von den Ausgleichsgewichten in Richtung der Spannbacken abstehende Bolzen auszubilden, die mit ihren freien Enden unmittelbar oder über Druckleisten als Zwischenglieder auf dem Spannkolben abgestützt sind.

Nach einer andersartigen Ausgestaltung kann jedem Keilgetriebe ein in einer in den Futterkörper und/oder den Abschlußdeckel eingearbeiteten Freisparung eingesetztes nach außen verstellbares Ausgleichsgewicht zugeordnet werden, das über ein an diesem befestigtes, kippbar im Futterkörper gelagertes Druckglied zwangsläufig mit einem parallel zu den Backen nach innen verschiebbarem Zwischenglied gekoppelt ist, das mit seiner Innenfläche im Bereich beider Keilhaken einer Backe auf der Außenmantelfläche des Spannkolbens, vorzugsweise in einer in diesen eingearbeiteten Aussparung abgestützt ist.

Außerdem sollte in weiterer Ausgestaltung der Erfindung die Außenkontur der Aussparungen jeweils der Außenmantelfläche des Futterkörpers und/oder des Abschlußdeckels angepaßt, vorzugsweise parallel zu dieser verlaufend ausgebildet sein.

Ferner ist es angebracht, das Ausgleichsgewicht in seiner Masse und den Abstand des Massenschwerpunktes zu der Schwenkachse oder zu dem Kipplager des Druckgliedes bzw. die wirksame Länge des das Ausgleichsgewicht mit dem Druckgleid verbindenden Hebels sowie den Abstand zwischen der Schwenkachse oder dem Kipplager des Druckgliedes und der an dem Keilhaken des Spannfutters anliegenden Stützfläche derart zu bemessen, daß in einem bestimmten Drehzahlbereich des Spannfutters die von einen Backe hervorgerufene, auf die Keilhaken des Spannkolbens einwirkende Kraft der auf diese von den zugeordneten Druckgliedern ausgeübten Kraft entspricht.

Um Brüche im Bereich der Keilhaken des Spannkolbens zu vermeiden, sollten diese mittels neben deren Hinterschneidungen etwa parallel zu deren Seitenflächen verlaufender Freisparungen In Form von Bohrungen, Schlitzen, Einschnitten oder dgl. elastisch verformbar ausgebildet sein.

Das gemäß der Erfindung ausgebildete kraftbetätigte Spannfutter zeichnet sich nicht nur durch einen geringen Bauaufwand und eine hohe Zuverlässigkeit und Formstabilität aus, sondern vor allem dadurch, daß die von den Backen hervorgerufenen Zentrifugalkräfte jeweils selbsttätig ausgeglichen werden und daß eine durch Verformung der Keilhaken des Spannkolbens bedingte Erhöhung der statischen Spannkraft nach einem Bearbeitungsvorgang nicht eintritt. Werden nämlich neben den Spannbacken radial bewegliche Ausgleichsgewichte angeordnet und werden die von diesen bei Rotation des Spannfutters hervorgerufenen Zentrifugalkräfte über Druckglidder im Bereich der Keilhaken des Spannkolbens an diesem abgestützt, so ist es ausgeschlossen, daß sich die Keilhaken verformen und der Spannkolben seine Lage ändert. Die statische Spannkraft wird somit nach Beendigung eines Bearbeitungsvorganges nicht erhöht, außerdem werden die von den Backen erzeugten Zentrifugalkräfte zuverlässig ausgeglichen, da die von den Ausgleichsgewichten hervorgerufenen Zentrifugalkräfte ebenfalls auf die Keilhaken des Spannkolbens, aber entgegengesetzt gerichtet zu den Zentrifugalkräften der Backen, einwirken. Verformungen des eingespannten Werkstückes sind somit zuverlässig ausgeschlossen, die Spannkraft bleibt vielmehr bei wechselnden Drehzahlen wie auch bei Stillstand des Spannfutters stets konstant.

In der Zeichnung sind zwei Ausführungsbeispiele eines gemäß der Erfindung ausgebildeten kraftbetätigten Spannfutters schematich dargestellt, die nachfolgend im einzelnen erläutert ist. Hierbei zeigen:

Fig. 1 das mittels eines. Spannkolbens betätigbare Keilhakenfutter mit schwenkbar gelagerten Ausgleichgewichten in einem Längsschnitt,

Fig. 2 das Spannfutter nach Fig. 1 in einem achssenkrechten Schnitt und

Fig. 3 das Spannfutter nach Fig. 1 mit radial verschiebbar geführten über einen Hebel an ein Druckglied angelenkten Ausgleichsgewichten.

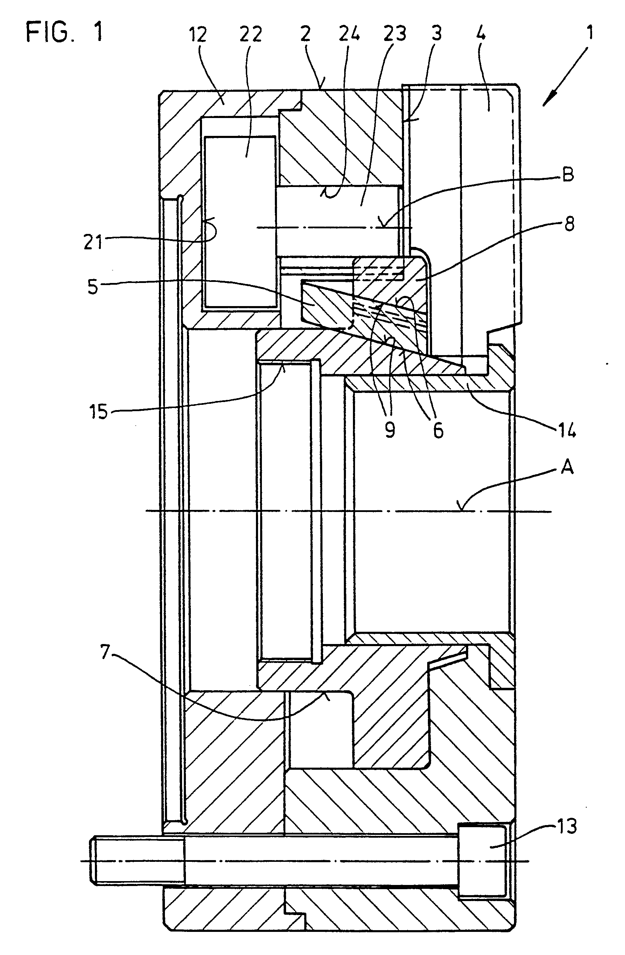

Das in Fig. 1 dargestellte und mit 1 bezeichnete kraftbetätigte Spannfutter weist in einem Futterkörper 2 in radial gerichteten Nuten 3 verschiebbar geführte Spann- oder Grundbacken 4 auf, die durch einen axial bewegbaren Spannkolben 7 über jeweils ein Keilgetriebe betätigbar sind. Dazu sind an den Backen 4 sowie an dem Spannkolben 7 ineinandergreifende Keilhaken 5 bzw. 8 vorgesehen, an die zur Längsachse A des Spannfutters 1 geneigte Keilflächen 6 bzw. 9 angearbeitet sind. Die axiale Verstellbewegung des Spannkolbens 7, die von einer Servoeinrichtung auf diesen durch ein in ein Gewinde 15 einschraubbares Zugglied übertragbar ist, wird auf diese Weise in eine radiale Verstellbewegung der Backen 4 umgesetzt.

Der Futterkörper 2 des Spannfutters 1 ist auf der Rückseite durch einen Deckel 12 verschlossen und mittels Schrauben 13 an der Werkstückspindel einer Drechmaschine zu befestigen. Durch eine in den Futterkörper 2 eingesetzte Büchse 14 sind die die Backen 4 aufnemenden Nuten 3 innen abgedeckt.

Um die durch die Backen 4 bei Rotation des Spannfutters 1 hervorgerufenen Zentrifugalkräfte auszugleichen und um außerdem den Spannkolben 7 in der jeweiligen Lage festzuhalten, sind beiderseits einer jeden Backe 4 in in den Abschlußdeckel 12 eingearbeitete Ausnehmungen bzw. Aussparungen 21 und 21′ Ausgleichsgewichte 22 und 22′ eingesetzt, deren Zentrifugalkräfte über in Bohrungen 24 und 24′ des Futterkörpers 2 drehbar gelagerte Druckglieder 23 und 23′ auf der Außenmantelfläche 10 des Spannkolbens 7 im Bereich der elastisch verformbaren Keilhaken 8 abgestützt sind. Dazu sind die Druckglieder 23 und 23′ jeweils mit einer Stützfläche 25 und 25′ versehen, die der äußeren Form des Spannkolbens 7 angepaßt ist. Die elastische Verformbarkeit der Keilhaken 8 wird durch in den Spannkolben 7 eingearbeitete Einschnitte 11 gewährleistet, so daß Brüche im Bereich der Keilhaken 8 vermieden werden.

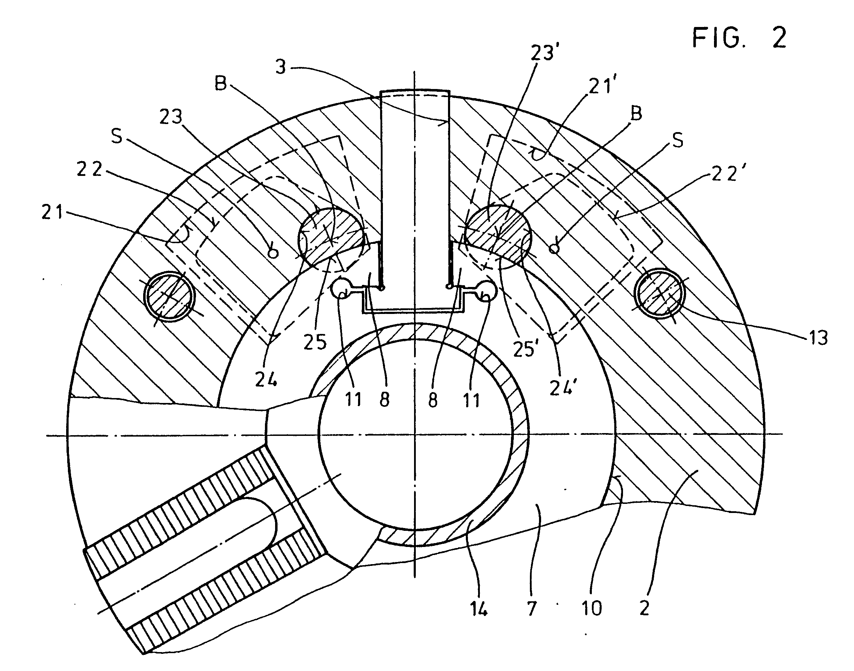

Durch die um die Achse B, die bei der Ausgestaltung nach Fig. 2 durch die Mittelachse der Druckglieder 23 und 23′ gebildet ist, verschwenkbar gelagerten Ausgleichsgewichten 22 und 22' wird bei Rotation des Spannfutters 1 eine Zentrifugalkraft hervorgerufen, die der durch die Backen 4 erzeugten Zentrifugalkraft entgegenwirkt. Eine Verformung der Keilhaken 8 des Spannkolbens 7, auf die diese entgegengesetzt zueinander gerichteten Kräfte einwirken, wird auf diese Weise verhindert, so daß der Spannkolben 7 bei einem Bearbeitungsvorgang seine Lage nicht verändern kann. Eine Erhöhung der statisch eingeleiteten Spannkraft ist somit nach Beendigung eines Bearbeitungsvorganges bei Stillstand des Spannfutters 1 ausgeschlossen.

Der Abstand zwischen der Schwenkachse B und dem Masseschwerpunkt S der Ausgleichsgewichte 22, 22' bzw. den Druckflächen 24 und 24' sowie die Masse der Ausgleichsgewichte 22, 22' sind derart bemessen, daß in einem bestimmten Drehzahlbereich des Spannfutters 1 die an den Keilhaken 8 des Spannkolbens 7 abgestützten Zentrifugalkräfte der Spannbacken und der Ausgleichsgewichte etwa gleich sind. Auf diese Welse ist ein Ausgleich sichergestellt.

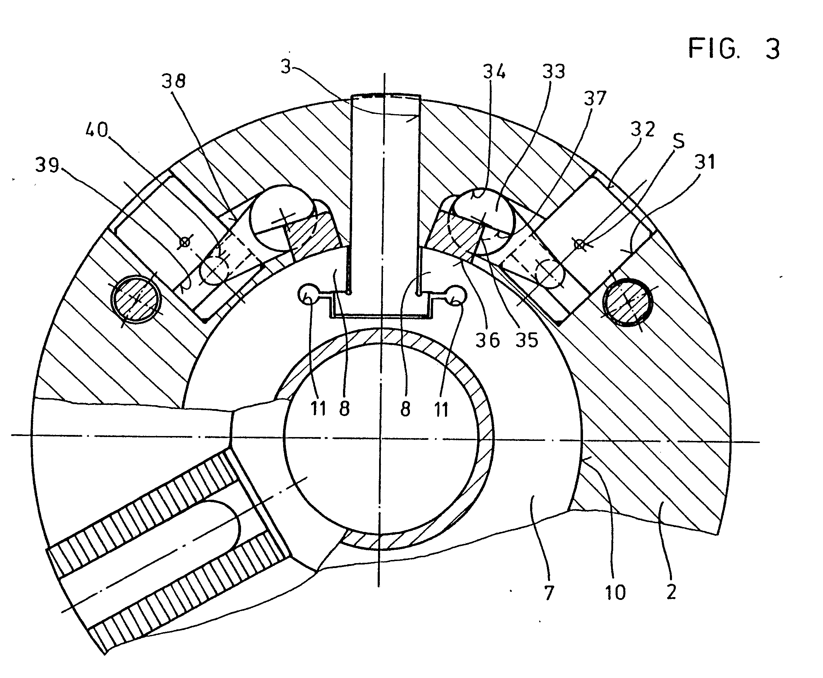

Bei der Ausgestaltung nach Fig. 3 sind in die beiderseits der Backen 4 angeordnete Aussparungen 31 radial verschiebbar geführte Ausgleichsgewichte 32 eingesetzt, die jeweils über einen Hebel 38 mit einem in einer Bohrung 34 des Futterkörpers 2 drehbar gelagerten Druckglied 33 gekoppelt sind. Das eine Ende des Hebels 38 ist mittels eines abstehenden Zapfens 40 in einer in das Ausgleichsgewicht 32 eingearbeiteten Nut 39 verschiebbar geführt, das andere Ende ist dagegen fest mit dem Druckglied 33 verbunden. Außerdem ist in eine Freisparung 37 des Druckgliedes 33 eine Druckleiste 35 eingesetzt, die mit einer der Außenkontur des Spannkolbens 7 angepaßten Druckfläche 36 auf diesem im Bereich der Keilhaken 8 abgestützt ist. Die von den Ausgleichsgewichten 32 hervorgerufenen Zentrifugalkräfte können mit Hilfe des Hebels 38 übersetzt werden, so daß die Ausgleichgewichte in ihrer Masse relativ klein zu halten sind.

## Patentansprüche

1. Kraftbetätigtes Spannfutter (1) für Drehmaschinen mit in einem Futterkörper (2) radial verschiebbar geführten Spannbacken (4), die durch einen axial bewegbaren Spannkolben (7) über jeweils ein Keilgetriebe betätigbar sind, das zur Längsachse des Spannfutters (1) geneigte Keilflächen (6, 9) aufweist, die an am Spannkolben (7) und den Spannbacken (4) angebrachte, ineinandergreifende Keilhaken (8) angearbeitet sind, und mit in in den Futterkörper (2) und/oder einen mit diesem verbundenen Abschlußdeckel (12) auf einer Seite oder auf beiden Seiten neben bzw. hinter einer jeden Spannbacke (4), eingearbeiteten Aussparungen (21, 21'; 31) angeordneten radial bewegbaren Fliehkraft-Ausgleichsgewichten (22, 22'; 32) die jeweils um eine parallel zur Längsachse (A) des Futterkörpers (2) verlaufende, außermittige Achse (B) schwenkbar gehalten oder radial verschiebbar geführt sind, und daß die Ausgleichsgewichte (22, 22'; 32) mit einem seitlich gegenüber ihrem Masseschwerpunkt (S) versetzt angeordneten, drehbar im Futterkörper (2) gelagerten oder einem in Achsrichtung des Spannfutters (1) sich erstreckenden, kippbar im Futterkörper (2) abgestützten Druckglied (23, 23'; 32) in Wirkverbindung stehen, über das die bei Rotation des Spannfutters (1) auftretenden Zentrifugalkräfte der Ausgleichsgewichte (22, 22'; 32) im Bereich der Keilhaken (8) des Spannkolbens (7) auf dessen Außenmantelfläche (10) unmittelbar oder über ein Zwischenglied (Druckleiste 35) abgestützt sind.

2. Kraftbetätigtes Spannfutter nach Anspruch 1, wobei bei nach außen verschwenkbar gelagerten Ausgleichsgewichten (22, 22') die Druckgleider (23, 23') unmittelbar an diesen angeformt sind und die Lagerung der Ausgleichsgewichte (22, 22') bilden.

3. Kraftbetätigtes Spannfutter nach Anspruch 1 oder 2, wobei die mit den Ausgleichsgewichten (22, 22') verbundenen Druckgleider (23, 23') auf der dem Spannkolben (7) zugekehrten Seite mit einer angearbeiteten, vorzugweise der Außenmantelfläche (10) des Spannkolbens (7) angepaßten Stützfläche (25, 25') versehen sind.

4. Kraftbetätigtes Spannfutter nach Anspruch 1, wobei bei radial verschiebbar geführten Ausgleichsgewichten (32) diese jeweils über einen schwenkbar gelagerten Hebel (38) mit dem Druckglied (33) gekoppelt sind, der mit einem Ende fest mit diesem verbunden und mit dem anderen Ende verschiebbar in einer in das Ausgleichsgewicht (32) eingearbeitete Nut (39) geführt ist.

5. Kraftbetätigtes Spannfutter nach einem oder mehreren der Ansprüche 1 bis 4, wobei das Druckglied (33) über eine zwischen diesem und dem Spannkolben (7) eingesetzten Druckleiste (35) auf diesem abgestützt ist.

6. Kraftbetätigtes Spannfutter nach Anspruch 5, wobei die Druckleiste (35) eine der Außenmantelfläche (10) des Spannkolbens (7) angepaßte Druckfläche (36) aufweist.

7. Kraftbetätigtes Spannfutter nach einem oder mehreren der Ansprüche 1 bis 6, wobei die die Ausgleichsgewichte (22, 22') aufnehmenden Aussparungen (21, 21') jeweils auf der den Spannbacken (4) gegenüberliegenden Seite in den Futterkörper (2) und/oder den Abschlußdeckel (12) eingearbeitet sind und daß die Druckglieder (23, 23') als von den Ausgleichsgewichten (22, 22') in Richtung der Spannbacken (4) abstehende Bolzen ausgebildet sind, die mit ihren freien Enden unmittelbar oder über die Druck-leisten (35) als Zwischenglieder auf dem Spannkolben (7) abgestützt sind.

8. Kraftbetätigtes Spannfutter nach Anspruch 1, wobei jedem Keilgetriebe ein in einer in den Futterkörper und/oder den Abschlußdeckel eingearbeiteten Freisparung eingesetztes, nach außen verstellbares Ausgleichswicht zugeordnet ist, das über ein an diesem befestigtes, kippbar im Futterkörper gelagertes Druckglied zwangläufig mit einem parallel zu den Backen nach innen verschiebbaren Zwischenglied gekoppelt ist, das mit seiner Innenfläche im Bereich beider Keilhaken einer Backe auf der Außenmantelfläche des Spannkolbens, vorzugsweise in einer in diesen eingearbeiteten Aussparung abgestützt ist.

9. Kraftbetätigtes Spannfutter nach einem oder mehreren der Ansprüche 1 bis 3 bzw. 7 und 8, wobei die Außenkontur der Aussparungen (21, 21') jeweils der Außenmantelfläche des Futterkörpers (2) und/oder des Abschlußdeckels (12) angepaßt, vorzugsweise parallel zu dieser verlaufend ausgebildet ist.

10. Kraftbetätigtes Spannfutter nach einem oder mehreren der Ansprüche 1 bis 9, wobei das Ausgleichsgewicht (22, 22'; 32) in seiner Masse und der Abstand des Massenschwerpunktes (S) zu der Schwenkachse (B) oder zu dem Kipplager des Druckgliedes (23, 23'; 33) bzw. die wirksame Länge des das Ausgleichsgewicht mit dem Druckglied verbindenden Hebels sowie der Abstand zwischen der Schwenkachse oder dem Kipplager des Druckgliedes und der an dem Keilhaken des Spannfutters anliegenden Stütz - fläche derart bemessen sind, daß in einem bestimmten Drehzahlbereich des Spannfutters die von einer Backe hervorgerufene, auf die Keilhaken des Spannkolbens einwirkende Kraft der auf diese von den zugeordneten Druckgliedern ausgeübten Kraft entspricht.

11. Kraftbetätigtes Spannfutter nach einem oder mehreren der Ansprüche 1 bis 10, wobei die Keilhaken (8) des Spannkolbens (7) mittels neben deren Hinterschneidungen etwa parallel zu deren Seitenflächen verlaufender Freisparungen (11) in Form von Bohrungen, Schlitzen, Einschnitten od. dgl. elastisch verformbar ausgebildet sind.

## Claims

1. A power chuck (1) for lathes, having clamping jaws (4) which are radially slideably mounted in a chuck body (2), said clamping jaws capable of being actuated by means of an axially movable drawsleeve (7) acting via respective combinations of cooperating tapered blocks comprising surfaces (6, 9) which are inclined towards the longitudinal axis of the chuck (1), said inclined surfaces (6, 9) being formed on interengaging tapered hooks (8) disposed on the drawsleeve (7) and the clamping jaws (4), said chuck also having radially movable centrifugal force compensating weights (22, 22'; 32) received in recesses (21, 21'; 31) formed in the chuck body (2) and/or in a cover plate (12) secured thereto, said recesses (21, 21'; 31) being disposed behind each clamping jaw (4) or adjacent thereto on one or both sides, each of said compensating weights (22, 22'; 32) being mounted such that it is pivotable about an eccentric axis (B) extending parallel to the longitudinal axis (A) of the chuck body (2) or being mounted such that it is radially slideable, each compensating weight (22, 22'; 32) being positively connected with a pressure member (23, 23'; 33) arranged laterally offset relative to the centre of mass (5) of said compensating weight (22, 22'; 32), said pressure members (23, 23'; 33) being rotatably mounted in the chuck body (2) or extending in the axial direction of the chuck (1) and pivotably supported in the chuck body (2), via which pressure members (23, 23'; 33) the centrifugal forces generated in the compensating weights (22, 22'; 32) during rotation of the chuck (1) are directly, or via an intermediate element (pressure pad 35), supported against the external surface (10) of the drawsleeve in the vicinity of its tapered hooks (8).

2. A power chuck according to Claim 1, having outwardly pivotably mounted compensating weights (22, 22'), in which chuck the pressure members (23, 23') are formed directly integrally with said compensating weights (22, 22') and act as supports thereof.

3. A power chuck according to Claims 1 or 2, wherein the pressure members (23, 23') connected with the compensating weights (22, 22') are, on the side facing the drawsleeve (7), provided with a formed supporting surface (25, 25'), preferably adapted to the external surface (10) of said drawsleeve (7).

4. A power chuck according to Claim 1, having radially slideably mounted compensating weights (32), each of which is coupled with the respective pressure member (33) via a pivotably mounted lever (38), one end of which is rigidly secured to said pressure member (33), and the other end of which is slideably arranged in a groove (39) formed in said compensating weight (32).

5. A power chuck according to one or more of Claims 1 to 4, wherein the pressure member (33) is supported against the drawsleeve (7) via a pressure pad (35) interposed between said pressure member (33) and said drawsleeve (7).

6. A power chuck according to Claim 5, wherein the pressure pad (35) has a pressure surface (36) adapted to the external surface (10) of the drawsleeve (7).

7. A power chuck according to one or more of Claims 1 to 6, wherein each of the recesses (21, 21') receiving the compensating weights (22, 22') is formed in the chuck body (2) and/or the cover plate (12) on the side facing the respective clamping jaw (4), and wherein the pressure members (23, 23') are formed as pins projecting from said compensating weights (22, 22') in the direction of said clamping jaws (4), the free ends of said pins being supported against the drawsleeve (7) either immediately or via the pressure pads (35) as intermediate elements.

8. A power chuck according to Claim 1, wherein there is associated with each combination of cooperating tapered blocks an outwardly moveable compensating weight which is received in a recess formed in the chuck body and/or the cover plate and which is, via a pressure member secured thereto and pivotably mounted in the clutch body, positively coupled to an intermediate element movable in an inward direction parallel to the jaws, the inner face of which is supported against the external surface of the drawsleeve in the vicinity of both tapered hooks of a respective jaw, preferably in a recess formed in said drawsleeve.

9. A power chuck according to one or more of Claims 1 to 3 or 7 and 8, wherein the outer contours of the recesses (21, 21') are adapted to the respective external surface of the chuck body (2) and/or the cover plate (12), and preferably arranged parallel thereto.

10. A power chuck according to one or more of Claims 1 to 9, wherein the mass of the compensating weight (22, 22'; 32) and the distance from the centre of mass (5) thereof to the axis of pivot (B) or to the pivoting bearing of the pressure member (23, 23'; 33), or the effective length of the lever connecting the compensating weight to the pressure member and the distance from the axis of pivot or the pivoting bearing of the pressure member to the supporting surface engaging with the tapered hook of the drawsleeve, are chosen such that within a certain range of rotational speeds of the chuck, the force generated by a jaw and acting on the tapered hooks of the drawsleeve corresponds to the force exerted on said tapered hooks by the associated pressure members.

11. A power chuck according to one or more of Claims 1 to 10, wherein the tapered hooks (8) of the drawsleeve (7) are made elastically deformable by means of recesses (11) in the form of holes, slots, incisions or similar formed adjacent to the undercuts of said tapered hooks and extending approximately parallel to the lateral faces thereof.

**Revendications**

1. Mandrin de serrage mécanique (1) pour tours avec machoires de serrage (4) guidées se déplaçant radialement dans un corps de mandrin (2) qui sont actionnées par un piston de serrage (7) déplacable axialement à l'aide d'une transmission présentant des faces profilées (6, 9) inclinées par rapport à l'axe longitudinal du mandrin de serrage (1), qui sont usinées sur les machoires de serrage (4) et sur les crochets profilés (8) en prise les uns dans les autres sur le piston de serrage (7) et dans le corps de mandrin (2) et/ou un couvercle de fermeture (12) relié avec celui-ci, dans les évidements (21, 21'; 31) usinés sur une côté et des deux côtés derrière ou à côté de chaque machoire de serrage (4), les contre-poids centrifuges (22, 22'; 32) déplacables radialement sont guidés de façon déplacable radialement ou maintenues de façon pivotable autour d'un axe excentré (B) parallèlement à l'axe longitudinal (A) du corps de mandrin (2), de sorte que les contre-poids (22, 22'; 32) sont décalés avec un centre de gravité (5) latéral opposé ou se développant dans le sens de l'axe du mandrin de serrage (1) se trouvent en relation effective de façon basculante dans l'élément de pression (23, 23'; 32) s'appuyant dans le corps de mandrin (2), à l'aide duquel les forces centrifuges des contre-poids (22, 22'; 32) se produisant lors de la rotation du mandrin de serrage (1), dans la zone des crochets (8) du piston de serrage (7) sont maintenues sur sa surface extérieure (10) directement ou à l'aide d'un élément intermédiaire (réglette de pression 35).

2. Mandrin de serrage mécanique selon le droit 1 d'où, les contre-poids (22, 22') logés de façon pivotante vers l'extérieur sont formés les éléments de pression (23, 23') directement sur ceux-ci et forment le logement des contre-poids (22, 22').

3. Mandrin de serrage mécanique, selon le droit 1 ou 2 d'où, les éléments de pression (23, 23') reliés avec les contrepoids (22, 22') sont munis sur le côté opposé au piston de serrage (7) d'un surface d'appui (25, 25') ajustée, usinée de préférence sur la surface extérieure (10) du piston de serrage (7).

4. Mandrin de serrage mécanique, selon le droit 1 d'où, dans le cas de contre-poids (32) guidés de façon déplacable radialement, ceux-ci sont accouplés avec l'élément de pression (33) qui est guidé à une extrémité et déplacable à l'autre extrémité dans une gorge (39) usinée dans le contre-poids (32), à l'aide d'un levier pivotable (38).

5. Mandrin de serrage mécanique selon 1 ou plusieurs des droits 1 à 4, d'ou, l'élément de pression (33) est appuyé aur celui-ci à l'aide d'une réglette de pression (35) placée entre celui-ci et le piston de serrage (7).

6. Mandrin de serrage mécanique, selon le droit 5, d'où, la réglette de pression (35) présente une surface de pression (36) ajustée à la surface de la chemise extérieure (10) du piston de serrage (7).

7. Mandrin de serrage mécanique, selon un ou plusieurs des droits 1 à 6, d'où, les évidements (21, 21') supportants les contre-poids (22, 22') sont usinés sur le côté opposé aux machoires de serrage (4) dans le corps de mandrin (2) et/ou au couvercle de fermeture (12) et de sorte que les éléments de pression (23, 23') sont conçus en tant qu'axes dépassant des contre-poids (22, 22') dans le sens des machoires de serrage (4) qui sont appuyés à leur extrémité libre sur le piston de serrage (7) directement ou à l'aide des réglettes de pression (35) en tant qu'élément intermédiaire.

8. Mandrin de serrage mécanique selon le droit 1, d'ou, pour chaque transmission il est attribué un contre-poids déplacable vers l'extérieur dans un évidement usiné dans le corps de mandrin et/ou dans le couvercle de fermeture, qui est accouplé, à l'aide d'un élément de pression placé de façon pivotable dans le corps de mandrin, provisoirement avec l'élément intermédiaire déplacable vers l'intérieur, parallèlement aux machoires, avec sa face intérieure dans la zone des deux crochets est appuyé une machoire de la surface extérieure de la chemise du piston de serrage, de préférence dans un évidement usiné dans celui-ci.

9. Mandrin de serrage mécanique selon un ou plusieurs des droits 1 à 3 ou 7 et 8, d'ou,

le contour extérieur des évidements (21, 21') est ajusté à la surface extérieure de la chemise du corps du mandrin (2) et/ ou du couvercle de fermeture (12) et est conçu de préférence avec un développement parallèle à celle-ci.

10. Mandrin de serrage mécanique selon 1 ou plusieurs des droits 1 à 9, d'où,

le contre-poids (22, 22'; 32) dans sa masse et l'écartement du centre de gravité des masses (5) par rapport à l'axe de pivotement (B) ou par rapport au roulement de basculement de l'élément de pression (23, 23'; 33) ou la longueur utile du levier reliant le contre-poids avec l'élément de pression, ainsi que l'écartement entre l'axe de pivotement ou le roulement de basculement et la surface d'appui portant sur les crochets du mandrin de serrage sont mesurés de telle sorte que dans une gamme de vitesse déterminée du mandrin de serrage la force agissante produite par un machoire sur les crochets du piston de serrage corresponde à la force excercée par les éléments de pression correspondants.

11. Mandrin de serrage mécanique selon un ou plusieurs des droits 1 à 10, d'ou,

les crochets (8) du piston de serrage (7) sont conçus de façon déformables élastiquement au moyen d'évidements (11) se développant à côté des contre-dépouilles presque parallèlement par rapport à ses surfaces latérales, sous la forme de perçages, fentes, encoches ou similaires.

FIG. 1

FIG. 2

FIG. 3